# FASCICULE DE BREVET EUROPEEN

(11) **EP 1 554 175 B1**
(45) Date de publication et mention de la délivrance du brevet: **01.03.2006**
(21) Numéro de dépôt: 03809351.4
(22) Date de dépôt: 23.10.2003
(51) Int. Cl.: B64D 43/00, G01C 23/00, G05D 1/08

(54) **PLANCHE DE BORD D'AERONEF**
FLUGZEUGINSTRUMENTENTAFEL
AIRCRAFT INSTRUMENT PANEL

(30) Priorité: 25.10.2002 FR 0213405
(43) Date de publication de la demande: 20.07.2005
(73) Titulaire: Thales, 92526 Neuilly Sur Seine (FR)
(72) Inventeur: BERTHOU, Nicolas, THALES Intellectual Property, F-94117 Arcueil (FR); AYMERIC, Bruno, THALES Intellectual Property, F-94117 Arcueil (FR); FAVARD, Jean-Yves, THALES Intellectual Property, F-94117 Arcueil (FR)
(74) Mandataire: Guérin, Michel
(86) Numéro de dépôt international: PCT/EP2003/050751
(87) Numéro de publication internationale: WO 2004/037643

(56) Documents cités:
- GB-A- 2 107 059
- MORGAN J ET AL: "MD-11 Electronic Instrument System" PROCEEDINGS OF THE DIGITAL AVIONICS SYSTEMS CONFERENCE. SEATTLE, OCT. 5 - 8, 1992, NEW YORK, IEEE, US, vol. CONF. 11, 5 octobre 1992 (1992-10-05), pages 248-253, XP010106756 ISBN: 0-7803-0820-4

## Description

L'invention concerne les instruments d'aide au pilotage des aéronefs. Plus précisément, elle concerne les instruments de bord des aéronefs dont le pilotage nécessite, pour des raisons techniques ou pour des raisons réglementaires, la présence d'instruments de secours pour afficher des données de navigation essentielles dans le cas où les systèmes d'affichage principaux tombent en panne. Le document "MD-11 Electronic Instrument System" (Morgan J et al, Procedings of the Digital Avioncs System Conference, Seattle, Oct. 5-8, 1992, New York, IEEE, US, vol. conf. 11, 5 October 1992, pages 248-253) correspond essentiellement au préambule de la revendication 1, le horizon de secours n'étant pas explicitement décrit. Le document GB-A-2 107 059 montre un horizon de secours utilisant un écran d'affichage, un pilote automatique n'est pas mentionné.

Dans un exemple typique, pour un aéronef commercial transportant des passagers, la planche de bord de l'aéronef comporte entre autres :
- un afficheur principal pour afficher avec une grande précision un horizon, une attitude de l'aéronef, et des données d'altitude, de cap, et de vitesse ; cet afficheur reçoit les informations calculées par un calculateur de l'avion à partir de données reçues de divers capteurs ;
- un horizon de secours, un altimètre de secours, et un anémomètre de secours indépendants du système principal, pour afficher de manière plus sommaire et avec une précision plus faible un horizon, une altitude, une vitesse et éventuellement quelques autres données ; les informations affichées sont calculées directement par ces instruments indépendants, ces derniers recevant des signaux de capteurs moins sophistiqués que ceux qui servent à l'affichage principal ; l'horizon de secours, l'altimètre de secours et l'anémomètre de secours peuvent être regroupés en un « instrument combiné de secours » (en anglais : integrated electronics standby instrument) qui affiche sur un même écran en couleur l'ensemble des informations de secours. Les capteurs associés à l'instrument combiné de secours sont intégrés ou non dans cet instrument ; en cas de panne du système d'affichage primaire, le pilote utilise les données des instruments de secours.
   Le système d'affichage principal est doublé lorsque le poste de pilotage comprend un poste de pilote et un poste de copilote. Les afficheurs primaires sont doublés mais l'instrument de secours n'est en général pas doublé. Il est disposé du côté du pilote.

Par ailleurs, les aéronefs prévus pour voler sur de longues distances peuvent aussi posséder un système de pilotage automatique, et la planche de bord comporte alors un équipement de commande de pilotage automatique. Cet équipement comporte des boutons de commande manuels que le pilote actionne pour définir un cap désiré, une altitude désirée, une vitesse désirée, et une pente de montée ou descente désirée (ou, au lieu d'une pente désirée, une vitesse verticale de montée ou descente désirée, ce qui revient au même). Les boutons de commande servent à actionner des codeurs angulaires dont les signaux logiques sont traités dans le poste de commande pour permettre l'élaboration de signaux de commande représentant les consignes choisies par le pilote. Ces signaux sont envoyés au calculateur de pilotage automatique qui contrôle la trajectoire de l'aéronef. En même temps, ces signaux de commande sont utilisés dans le poste de commande lui-même pour y afficher, à l'intention du ou des pilotes, les valeurs de consigne choisies manuellement au moyen des boutons de commande.

Enfin, dans les avions commerciaux de taille importante, on prévoit, pour des raisons de sécurité, que toute l'électronique et les logiciels de fonctionnement du calculateur de pilotage automatique sont dédoublés ; ainsi, si une panne se produit dans un élément matériel ou logiciel d'une voie de calcul, l'autre voie peut prendre le relais. Le calculateur comporte donc deux voies de calcul (incluant deux voies dans les éléments électroniques du tableau de commande du pilotage automatique sur la planche de bord), et un contrôle de l'une des voies par l'autre pour vérifier en permanence qu'il n'y a pas de divergence dans les traitements faits par les deux voies.

L'ensemble de la planche de bord est particulièrement coûteux lorsqu'on doit satisfaire toutes les nécessités indiquées ci-dessus ou même certaines seulement. Un but de l'invention est de rendre la planche de bord moins coûteuse.

Selon l'invention, on propose une planche de bord qui, outre un système d'affichage principal d'horizon et de paramètres nécessaires au pilotage, comporte deux équipements identiques du point de vue du matériel et du point de vue du logiciel, qui sont pourvus chacun d'un écran d'affichage, de moyens de commande de pilotage automatique (notamment des boutons de réglage de consignes données par le pilote), de moyens de calcul et de données de secours (horizon de secours, altitude de secours, vitesse de secours en principe), et des moyens d'affichage de ces données sur l'écran d'affichage.

En régime normal, l'un des équipements est configuré dans un mode « affichage de consignes de pilotage automatique » ; ses boutons de commande servent alors à donner les consignes au calculateur de pilotage automatique, et les consignes sont affichées sur l'écran. L'autre équipement est configuré en mode « affichage de données combinées de secours ». Il affiche sur l'écran l'horizon de secours, la vitesse de secours et l'altitude de secours qu'il calcule à partir de signaux fournis par des capteurs ; les capteurs, de préférence, ne font pas partie de l'équipement ; ils sont extérieurs à l'équipement et ils fournissent simultanément aux deux équipements leurs signaux de mesure.

Les équipements étant identiques, le coût de fabrication est plus réduit. D'autre part, puisque les deux équipements sont identiques, ils permettent de satisfaire à la contrainte de présence d'une double voie de calcul pour le pilotage automatique. L'équipement qui affiche les données de secours possède le logiciel de calcul servant au mode « affichage de consignes de pilotage automatique » et ce logiciel fonctionne, mais sans afficher les consignes de pilotage automatique, même lorsque l'équipement est en mode « affichage de données de secours ». Il reçoit les consignes de l'autre équipement et les traite pour les envoyer indépendamment de l'autre équipement au calculateur de pilotage automatique.

En régime de panne d'un des deux équipements, l'autre se configure automatiquement en mode « affichage de consignes de pilotage automatique ». En variante, puisque les deux équipements possèdent tout ce qu'il faut pour afficher les données de secours, l'équipement qui n'est pas en panne peut afficher sur une moitié de l'écran les données de pilotage automatique et sur l'autre les données de secours. Il s'agit là d'un mode d'affichage dégradé, mais qui est acceptable car il ne serait utilisé qu'en cas de panne.

Enfin, en cas de pilotage double, avec un pilote et un copilote, les systèmes d'affichage étant placés entre le pilote et le copilote, on prévoit de préférence qu'un bouton de commande de basculement est présent sur chacun des équipements pour inverser les modes de travail des deux équipements en fonction de la personne qui pilote : le pilote à gauche imposera en principe à l'équipement qui est le plus près de lui le mode d'affichage de consignes de pilotage, et à l'équipement qui est plus loin de lui le mode d'affichage de données de secours. Quand le copilote à droite prend le relais, il inverse les modes de manière à imposer à l'équipement qui est plus près de lui le mode d'affichage de consignes de pilotage automatique.

En résumé, l'invention propose une planche de bord d'aéronef comprenant d'une part au moins un système d'affichage principal d'horizon et de paramètres nécessaires au pilotage, d'autre part un équipement de commande de pilotage automatique, lequel comprend des boutons de commande manuelle de consignes de pilotage, et enfin un équipement d'affichage de secours permettant d'afficher, d'une manière indépendante du système d'affichage principal, des données combinées de secours parmi lesquelles un horizon de secours, caractérisé en ce que l'équipement de commande de pilotage automatique et l'équipement d'affichage de secours sont deux équipements identiques du point de vue matériel et du point de vue logiciel et comportent chacun un écran d'affichage capable d'afficher les données combinées de secours, et en ce que les deux équipements possèdent au moins deux modes de fonctionnement, l'un des modes étant un mode d'affichage de données combinées de secours et l'autre étant un mode d'affichage des consignes de pilotage automatique données par le pilote, les équipements fonctionnant en régime normal chacun dans un mode différent.

Les consignes données par le pilote sont introduites par l'intermédiaire de boutons de commande sur l'équipement qui est en mode d'affichage de consignes. De préférence, ces consignes sont envoyées en même temps aux deux équipements, qui les traitent en parallèle pour envoyer des ordres correspondants, par deux voies indépendantes, à deux systèmes de calcul indépendants d'un calculateur de pilotage automatique à voies de calcul redondantes.

L'invention concerne non seulement une planche de bord ainsi constituée, mais aussi l'équipement combiné de secours lui-même, adapté à être installé sur cette planche de bord, l'équipement combiné de secours comportant à la fois les matériels et les logiciels capables d'afficher sur un écran d'affichage unique soit des données de secours, parmi lesquelles un horizon de secours, lorsque l'équipement fonctionne dans un mode d'affichage de données de secours, soit des consignes de pilotage automatique lorsque l'équipement fonctionne dans un mode d'affichage de consignes de pilotage, l'équipement étant pourvu de boutons de réglage de consignes.

D'autres caractéristiques et avantages de l'invention apparaîtront à la lecture de la description détaillée qui suit et qui est faite en référence aux dessins annexés dans lesquels:
- la figure 1 représente un instrument combiné de secours de l'art antérieur ;
- la figure 2 représente un tableau de commande de pilotage automatique de l'art antérieur ;
- la figure 3 représente une planche de bord regroupant les éléments des figures 1 et 2 ;
- la figure 4 représente une planche de bord selon l'invention ;
- la figure 5 représente plus en détail une configuration possible des deux équipements identiques de l'invention, lorsqu'ils fonctionnent l'un selon un mode d'affichage de consignes de pilotage automatique et l'autre selon un mode d'affichage de données de secours.

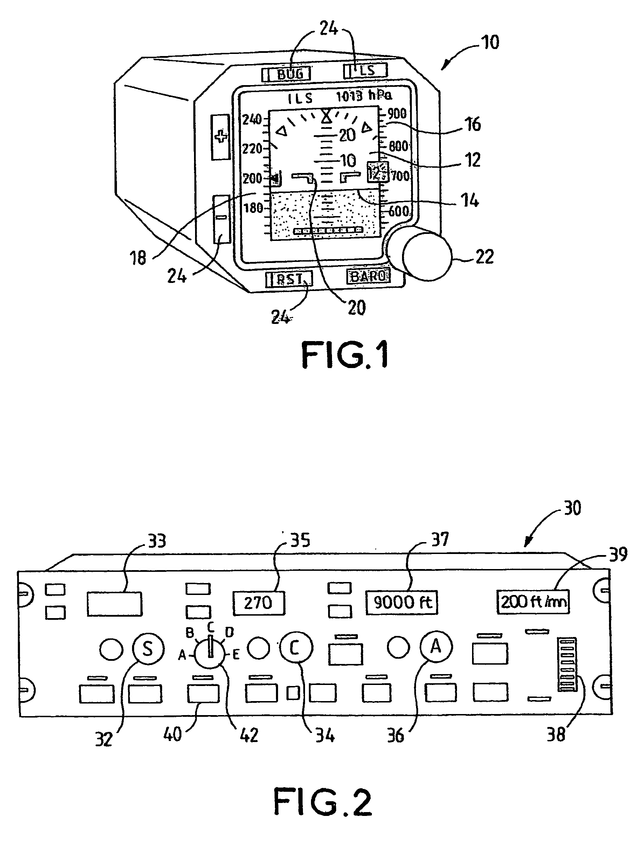

Sur la figure 1, on voit un instrument combiné de secours 10, qui comporte un écran en couleur 12 pour l'affichage d'un horizon 14 (terre en marron au dessous, ciel en bleu au dessus) et de données de secours nécessaires au pilotage, à savoir principalement altitude (échelle graduée défilante 16 à droite), vitesse (échelle graduée défilante 18 à gauche), et un symbole d'attitude de l'avion 20. L'affichage de l'horizon et des données est fait en fonction d'un calcul fait par l'instrument à partir de signaux en provenance de capteurs dont certains sont extérieurs à l'instrument et dont d'autres peuvent être à l'intérieur ou à l'extérieur de l'instrument. Les capteurs sont en général des capteurs de pression (pour la vitesse et pour l'altitude) et une unité de mesure inertielle pour l'attitude.

L'instrument comporte en général un bouton de réglage 22 servant au recalage de la pression atmosphérique en fonction de données communiquées localement (par exemple fournies par les services de météorologie à proximité d'un aéroport). Il comporte d'autres boutons de commande 24 servant à divers usages (recalage d'horizon, mise en place sur l'écran de marques de plages de vitesse ou d'altitude autorisées, etc.). L'instrument comporte des circuits électroniques et des logiciels embarqués. Il fournit des informations indépendantes de celles qui sont données par les systèmes principaux d'aide à la navigation de l'aéronef.

La figure 2 représente un poste de commande de pilotage automatique 30. Il comporte essentiellement des boutons de réglage de valeurs de consigne données par le pilote à un calculateur de pilotage automatique présent dans l'aéronef. Et il comporte des petits écrans d'affichage des valeurs de consigne introduites, pour que le pilote puisse contrôler l'action qu'il exerce sur les boutons. Par exemple, il y a quatre boutons de consigne 32, 34, 36, 38 respectivement pour la vitesse de l'aéronef, le cap ou la route (heading ou track en anglais), l'altitude, et la pente de montée ou descente (pitch en anglais). Et il y a quatre afficheurs correspondants 33, 35, 37, 39, chacun à côté du bouton de consigne correspondant.

Les autres boutons de commande du tableau de commande de pilotage automatique, référencés à titre d'exemple par 40, 42 sont des boutons d'engagement ou non du pilote automatique, des boutons de choix de mode de pilotage, etc.

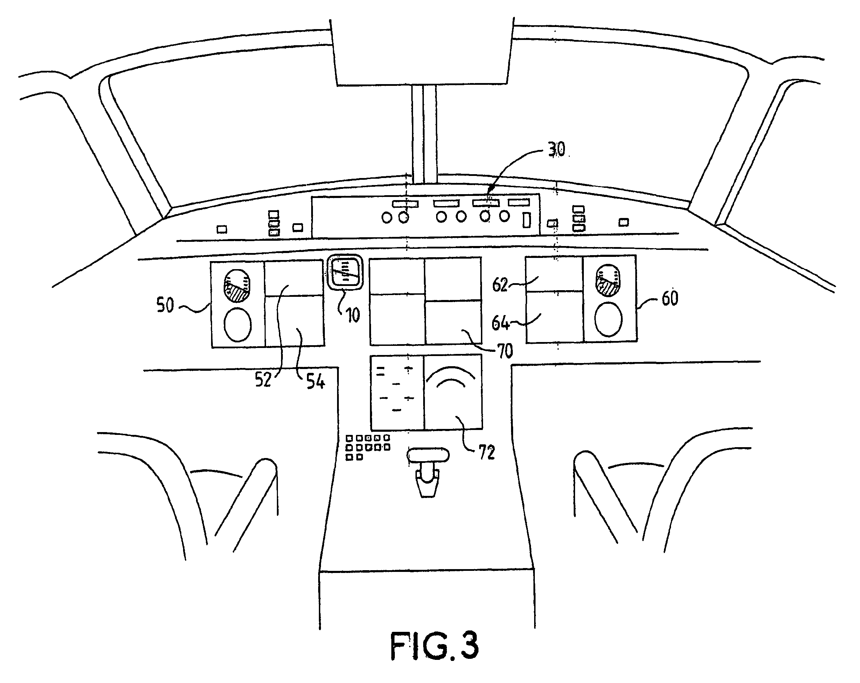

La figure 3 représente une planche de bord d'avion de transport de passagers, avec poste de pilote et poste de copilote. Le système d'affichage principal comprend plusieurs écrans de pilotage et de navigation. Pour le pilotage, l'horizon et les données de pilotage sont affichées sur un écran 50 du pilote et un écran 60 du copilote. D'autres écrans 52, 54, pour le pilote, 62, 64 pour le copilote, et 70, 72 (communs au pilote et au copilote) fournissent d'autres indications utiles au pilotage ou à la navigation. L'instrument combiné de secours 10 est placé du côté du pilote. Le tableau de commande de pilotage automatique 30, unique, est placé au dessus de l'ensemble des systèmes d'affichage de pilotage et de navigation. Le pilote et le copilote ont accès au tableau de commande de pilotage automatique qui est au centre de la planche de bord dans la partie supérieure de celle-ci. Les consignes de pilotage automatique sont traitées comme on l'a dit sur deux voies de calcul indépendantes mais à partir d'un seul tableau de commande.

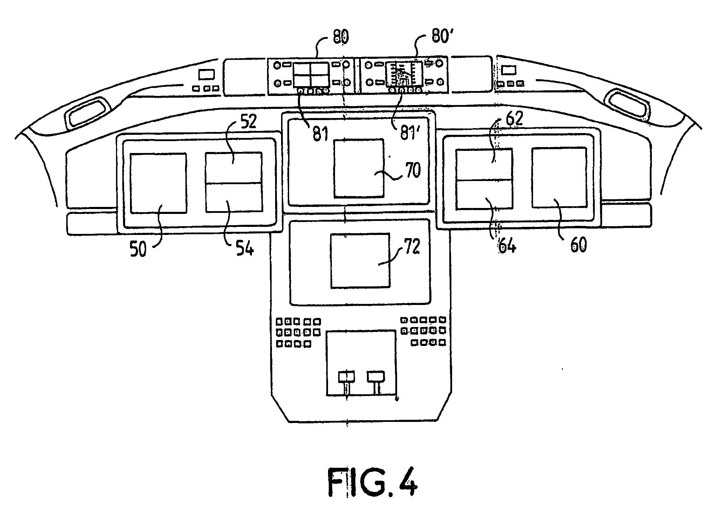

La figure 4 représente un exemple de planche de bord selon l'invention. Les systèmes d'affichage principaux, pour le pilotage comme pour la navigation sont classiques et peuvent être identiques à ceux de la figure 3: écrans 50, 52, 54, 60, 62, 64 70, 72. L'instrument combiné de secours est maintenant placé à côté du tableau de commande de pilotage automatique, au dessus de ces systèmes d'affichage principaux. Et l'instrument de secours et le tableau de commande de pilotage automatique sont maintenant constitués par deux équipements identiques et interchangeables, aussi bien du point de vue matériel que du point de vue logiciel, et ils sont couplés entre eux pour pouvoir fonctionner ensemble de manière cohérente. Ces deux équipements, côte à côte, sont désignés ici par les références 80 et 80'.

En mode de fonctionnement normal de l'aéronef (pas de panne du système d'affichage principal de l'aéronef, et pas de panne de l'un ou l'autre des équipements 80 et 80') chaque équipement peut effectuer l'ensemble des deux types de tâches pour lesquelles il est conçu : tâches de calcul de données de secours d'une part pour jouer le rôle d'instrument combiné de secours et tâches de pilotage automatique pour jouer le rôle de tableau de commande de pilotage automatique ; mais, pour ce qui concerne l'affichage sur leur écran respectif, ils fonctionnent à un moment donné selon deux modes différents et pas sur le même mode : l'un affiche les données de secours calculées mais n'affiche pas d'indications de consignes de pilotage automatique ; l'autre n'affiche pas de données de secours mais affiche des indications propres au pilotage automatique et notamment les consignes qui sont données par le pilote ou le copilote.

Un bouton de commande de basculement 81, 81' sur chacun des équipements 80 et 80' permet de basculer le mode de fonctionnement des équipements pour inverser les rôles. L'équipement qui était dans le mode « affichage de données de secours » passe dans le mode « affichage de consignes de pilotage automatique », et réciproquement, sous la commande du bouton de changement de mode de l'un ou l'autre des équipements. Ce basculement est réalisé en pratique lors d'un passage du pilotage par le pilote (siège gauche de l'avion) à un pilotage par le copilote (siège droit), de manière que la personne qui pilote ait de son côté l'affichage des données de pilotage automatique (en régime de fonctionnement normal sans panne). Le bouton de basculement de mode de l'un des équipements agit donc d'une part pour inverser le mode de cet équipement et d'autre part pour envoyer un signal d'inversion de mode à l'autre équipement identique.

L'action sur les boutons de commande de consigne de l'équipement qui est en mode d'affichage de consignes de pilotage (par exemple l'équipement 80) provoque le calcul par cet équipement de données à destination du calculateur de pilotage automatique de l'avion, mais aussi l'affichage des données de consigne imposées par cette action. Et, simultanément, les signaux issus des boutons de commande de cet équipement sont transmis à l'autre équipement (80'), lequel élabore de la même manière des signaux à destination du calculateur de pilotage automatique. Les signaux issus de l'équipement 80 et 80', à destination du calculateur, peuvent donc être élaborés indépendamment (en dehors de l'action sur les boutons de commande qui est une action unique) et transmis à deux voies indépendantes du calculateur de pilotage automatique. Ceci permet de satisfaire à une exigence de sécurité de pilotage automatique, sous forme d'un traitement indépendant par deux équipements distincts alors même que les deux équipements affichent des informations différentes à destination des pilotes.

En cas de panne des systèmes d'affichage principaux, le pilote a le choix, par le bouton de commande de basculement d'affichage, de placer près de lui l'affichage des données de secours ou de conserver près de lui l'affichage des commandes de pilotage automatique. En phase d'approche à l'atterrissage il placera près de lui l'affichage des données de secours.

En cas de panne de l'un des deux équipements 80 et 80', l'équipement qui reste fonctionnel sera mis d'office en mode d'affichage de consignes de pilotage automatique, s'il n'y est pas déjà, pour que le pilote garde la maîtrise du mode de pilotage et celle des consignes qu'il donne.

On fait l'hypothèse qu'on n'a pas simultanément les systèmes d'affichage principaux et un équipement 80 et 80' en panne, auquel cas on perdrait les données de secours. Toutefois, même dans ce cas, le pilote peut, en phase d'atterrissage et après s'être placé en mode de pilotage manuel, rebasculer l'équipement 80 ou 80' qui n'est pas en panne sur le mode d'affichage de données de secours.

En variante, en cas de panne d'un équipement 80 ou 80', on peut prévoir que l'équipement qui n'est pas en panne passe dans un troisième mode d'affichage, qui est un mode dégradé, dans lequel une partie de l'écran affiche les données de secours et une autre partie affiche les données de pilotage automatique.

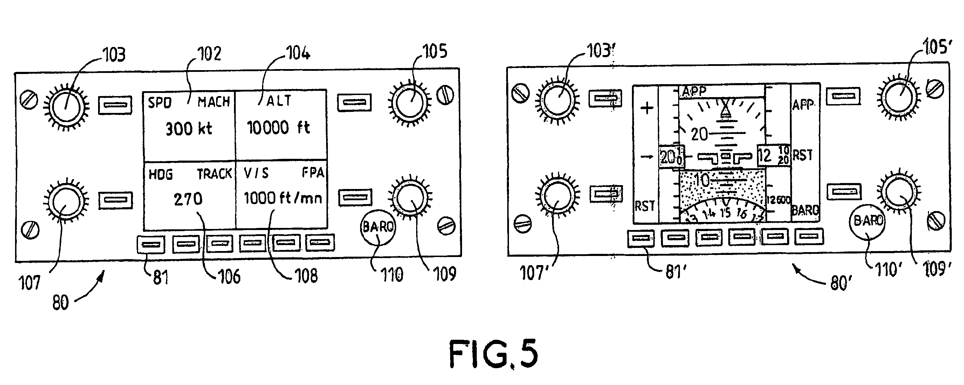

La figure 5 représente côte à côte les deux équipements 80 et 80' selon l'invention, en régime normal, c'est-à-dire l'un affichant les données de pilotage automatique et l'autre affichant les données de secours et en particulier l'horizon de secours.

L'écran de l'équipement 80 affiche les mêmes indications que l'instrument combiné de secours 10 de la figure 1. L'écran de l'équipement 80' affiche notamment des consignes de pilotage automatique données par le pilote. Ces consignes sont affichées sous une forme différente de celle de l'art antérieur puisqu'on n'a plus de petits afficheurs individuels placés à côté de chaque bouton de réglage de consigne comme c'était le cas par exemple sur la figure 2. Les consignes sont maintenant affichées sur un écran large qu'on peut par exemple diviser (en mode d'affichage de consignes de pilotage) en quatre zones 102, 104, 106, 108, correspondant à quatre consignes différentes. Chaque zone est à proximité d'un bouton de réglage de consigne respectif 103, 105, 107, 109.

Parmi les boutons de commande de l'équipement 80 ou 80', il y a donc au moins quatre boutons de commande de consigne de pilotage, respectivement pour la vitesse (en haut à gauche), le cap (en bas à gauche) l'altitude (en haut à droite) et la vitesse verticale (en bas à droite). Il y a aussi un bouton de réglage tournant 110, 110' qui sert au recalage de la pression atmosphérique locale pour la fonction altimétrique présente en mode d'affichage de données de secours. Différents boutons supplémentaires, boutons poussoirs ou commutateurs, peuvent servir, en lien avec les informations affichées par logiciel sur l'écran, à exécuter différentes fonctions similaires à celles des instruments combinés de secours de l'art antérieur (placement de marques de vitesse max ou min par exemple) ou à celles des tableaux de commande de pilotage automatique de l'art antérieur (choix d'engagement ou non du pilote automatique, choix de mode de pilotage automatique, etc.). Pour le pilote, les fonctions de ces boutons sont définies par logiciel en relation directe avec les indications affichées sur l'écran, de sorte que les mêmes boutons peuvent être utilisés pour plusieurs fonctionnalités différentes, y compris des fonctionnalités appartenant aux deux modes différents de l'équipement.

Les boutons de commande de réglage de consigne sont de toutes façons actifs (c'est-à-dire qu'ils exécutent un réglage de consigne) seulement sur l'équipement qui est dans le mode d'affichage de consigne de pilotage. Sur l'autre équipement, ils sont inactifs c'est-à-dire qu'en les tournant on ne modifie pas de consignes de pilotage. Ils peuvent cependant être actifs pour une autre fonction liée à l'affichage de données de secours, mais ce n'est en général pas souhaitable pour des raisons de sécurité.

Ainsi, dans l'exemple décrit, on a préféré prévoir sur les équipements un bouton spécifique 110, 110' pour le recalage de pression atmosphérique, bien qu'en théorie un des boutons de réglage de consigne 103 à 109 pourrait servir à ce recalage puisque ces boutons ne définissent pas de consigne lorsque l'équipement est en mode d'affichage de données de secours. Le bouton spécifique 110, 110' n'est actif pour effectuer un recalage de pression atmosphérique que lorsque l'équipement est en mode d'affichage de données de secours.

Dans le cas des avions commerciaux de transports de passagers, on satisfait grâce à l'invention aux contraintes de sécurité du pilotage automatique (10⁻⁶ panne par heure, taux obtenu grâce à la redondance) ainsi qu'à celles des fonctions de secours (10⁻³ panne par heure), avec une architecture simplifiée de la planche de bord.

## Revendications

1. Planche de bord d'aéronef comprenant d'une part au moins un système (50, 60) d'affichage principal d'horizon et de paramètres nécessaires au pilotage, d'autre part un équipement de commande de pilotage automatique (80), lequel comprend des boutons de commande manuelle de consignes de pilotage (103, 105, 107, 109), et enfin un équipement d'affichage de secours (80') permettant d'afficher, d'une manière indépendante du système d'affichage principal, des données combinées de secours parmi lesquelles un horizon de secours, **caractérisé en ce que** l'équipement de commande de pilotage automatique et l'équipement d'affichage de secours sont deux équipements identiques du point de vue matériel et du point de vue logiciel et comportent chacun un écran d'affichage capable d'afficher les données combinées de secours, et **en ce que** les deux équipements possèdent au moins deux modes de fonctionnement, l'un des modes étant un mode d'affichage de données combinées de secours et l'autre étant un mode d'affichage des consignes de pilotage automatique données par le pilote, les équipements fonctionnant en régime normal chacun dans un mode différent.

2. Planche de bord selon la revendication 1, **caractérisée en ce que** les boutons de commande de consigne sont actifs sur l'équipement qui est en mode d'affichage de consignes de pilotage et inactifs en tant que boutons de commande de réglage de consigne sur l'équipement qui est en mode d'affichage de données de secours.

3. Planche de bord selon l'une des revendications 1 et 2, **caractérisé en ce que** les boutons de commande de l'équipement qui est en mode d'affichage de consignes de pilotage permettent l'établissement de signaux de réglage de consigne qui sont transmis aussi à l'autre équipement, lequel traite également ces signaux sans cependant afficher les consignes.

4. Planche de bord selon l'une des revendications 1 à 3, **caractérisé en ce que** chacun des deux équipements comporte un bouton de commande de basculement (81, 81') qui permet d'inverser les modes de fonctionnement des deux équipements.

5. Planche de bord selon l'une des revendications 1 à 5, **caractérisé en ce que** des moyens sont prévus pour, en cas de panne de l'un des deux équipements, faire passer l'autre équipement en mode d'affichage de consignes de pilotage automatique s'il n'y est pas déjà.

6. Planche de bord selon l'une des revendications 1 à 5, **caractérisé en ce que** les équipements comportent un bouton de commande (110, 110') distinct des boutons de réglage de consigne de pilotage, pour le recalage de la pression atmosphérique en vue d'un calcul d'altitude, ce bouton n'étant actif pour le recalage de pression que lorsque l'équipement est en mode d'affichage de données de secours.

7. Equipement combiné de secours destiné à être monté sur une planche de bord selon l'une des revendications précédentes, **caractérisé en ce qu'**il comporte à la fois les matériels et les logiciels capables d'afficher sur un écran d'affichage unique soit des données de secours, parmi lesquelles un horizon de secours, lorsque l'équipement fonctionne dans un mode d'affichage de données de secours, soit des consignes de pilotage automatique lorsque l'équipement fonctionne dans un mode d'affichage de consignes de pilotage, l'équipement étant pourvu de boutons de réglage de consignes de pilotage.

8. Equipement selon la revendication 7, **caractérisé en ce qu'**il comporte un bouton de recalage de pression atmosphérique (110), actif lorsque l'équipement est en mode d'affichage de données de secours.

9. Equipement selon la revendication 8, **caractérisé en ce que** l'équipement possède un bouton de basculement de mode (81), actif pour inverser le mode de fonctionnement de l'équipement et apte à envoyer un signal d'inversion de mode à un autre équipement identique de la même planche de bord.

## Patentansprüche

1. Luftfahrzeug-Instrumentenbrett, das einerseits mindestens ein Hauptanzeigesystem (50, 60) des Horizonts und der für die Steuerung notwendigen Parameter, andererseits eine Autopilot-Steuereinrichtung (80) mit Knöpfen zur Handsteuerung von Autopilot-Sollwerten (103, 105, 107, 109), und schließlich eine Notanzeigeeinrichtung (80') aufweist, die es ermöglicht, unabhängig vom Hauptanzeigesystem kombinierte Notdaten, darunter einen Nothorizont, anzuzeigen, **dadurch gekennzeichnet, dass** die Autopilot-Steuereinrichtung und die Notanzeigeeinrichtung zwei Einrichtungen mit gleicher Hardware und Software sind und je einen Anzeigebildschirm aufweisen, der in der Lage ist, die kombinierten Notdaten anzuzeigen, und dass die beiden Einrichtungen mindestens zwei Betriebsmodi aufweisen, von denen einer ein Anzeigemodus von kombinierten Notdaten und der andere Modus zur Anzeige der vom Piloten eingegebenen Autopilot-Sollwerte ist, wobei die Einrichtungen im Normalbetrieb je in einem anderen Modus arbeiten.

2. Instrumentenbrett nach Anspruch 1, **dadurch gekennzeichnet, dass** die Sollwertsteuerknöpfe bei der im Autopilot-Sollwertanzeigemodus befindlichen Einrichtung aktiv sind und bei der im Notdatenanzeigemodus befindlichen Einrichtung als Sollwerteinstellungssteuerknöpfe inaktiv sind.

3. Instrumentenbrett nach einem der Ansprüche 1 und 2, **dadurch gekennzeichnet, dass** die Steuerknöpfe der Einrichtung, die im Autopilot-Sollwertanzeigemodus ist, die Erzeugung von Sollwerteinstellsignalen erlauben, die auch an die andere Einrichtung übertragen werden, die diese Signale ebenfalls verarbeitet, ohne aber die Sollwerte anzuzeigen.

4. Instrumentenbrett nach einem der Ansprüche 1 bis 3, **dadurch gekennzeichnet, dass** jede der beiden Einrichtungen einen Umschaltsteuerknopf (81, 81') aufweist, der es ermöglicht, die Betriebsmodi der beiden Einrichtungen umzuschalten.

5. Instrumentenbrett nach einem der Ansprüche 1 bis 4, **dadurch gekennzeichnet, dass** Mittel vorgesehen sind, um bei einem Ausfall einer der beiden Einrichtungen die andere Einrichtung in den Modus der Anzeige von Autopilot-Sollwerten übergehen zu lassen, wenn sie sich nicht bereits in diesem Modus befindet.

6. Instrumentenbrett nach einem der Ansprüche 1 bis 5, **dadurch gekennzeichnet, dass** die Einrichtungen einen Steuerknopf (110, 110'), der sich von den Autopilot-Sollwerteinstellknöpfen unterscheidet, für die Einstellung des Atmosphärendrucks zum Zweck einer Höhenberechnung aufweisen, wobei dieser Knopf nur dann für die Druckeinstellung aktiv ist, wenn die Einrichtung im Notdatenanzeigemodus ist.

7. Kombinierte Noteinrichtung, die dazu bestimmt ist, auf ein Instrumentenbrett nach einem der vorhergehenden Ansprüche montiert zu werden, **dadurch gekennzeichnet, dass** sie sowohl die Hardware als auch die Software aufweist, die in der Lage sind, auf einem einzigen Anzeigebildschirm entweder Notdaten, darunter einen Nothorizont, anzuzeigen, wenn die Einrichtung in einem Notdatenanzeigemodus arbeitet, oder Autopilot-Sollwerte anzuzeigen, wenn die Einrichtung in einem Autopilot-Sollwertanzeigemodus arbeitet, wobei die Einrichtung mit Autopilot-Sollwerteinstellknöpfen versehen ist.

8. Einrichtung nach Anspruch 7, **dadurch gekennzeichnet, dass** sie einen Atmosphärendruckeinstellknopf (110) aufweist, der aktiv ist, wenn die Einrichtung im Notdatenanzeigemodus ist.

9. Einrichtung nach Anspruch 8, **dadurch gekennzeichnet, dass** sie einen Modusumschaltknopf (81) aufweist, der aktiv ist, um den Betriebsmodus der Einrichtung umzuschalten, und der in der Lage ist, ein Modusumschaltsignal an eine andere gleiche Einrichtung des gleichen Instrumentenbretts zu senden.

## Claims

1. Aircraft instrument panel comprising on the one hand at least one main display system (50, 60) for horizon and necessary piloting parameters, and on the other hand an item of automatic pilot control equipment (80), which comprises manual piloting set point control buttons (103, 105, 107, 109) and finally an item of standby display equipment (80') allowing the display, independently of the main display system, of integrated standby data including a standby horizon, **characterized in that** the automatic pilot control equipment and the standby display equipment are two identical items of equipment from the hardware point of view and the software point of view and each comprises a display screen capable of displaying the integrated standby data, and **in that** the two items of equipment have at least two operating modes, one of the modes being an integrated standby data display mode and the other being a mode of displaying the automatic pilot set points given by the pilot, the items of equipment each operating in a different mode in normal operating conditions.

2. Instrument panel according to Claim 1, **characterized in that** the set point control buttons are active on the equipment that is in piloting set point display mode and inactive as control buttons for set point adjustment on the equipment that is in standby data display mode.

3. Instrument panel according to either one of Claims 1 and 2, **characterized in that** the control buttons of the item of equipment that is in piloting set point display mode allow the establishment of set point adjustment signals that are also transmitted to the other item of equipment, which also processes these signals without however displaying the set points.

4. Instrument panel according to one of Claims 1 to 3, **characterized in that** each of the two items of equipment comprises a switchover control button (81, 81') which is used to invert the operating modes of the two items of equipment.

5. Instrument panel according to one of Claims 1 to 4, **characterized in that** means are provided, in the event of the failure of one of the two items of equipment, for switching the other item of equipment to automatic pilot set point display mode if it is not already **in that** mode.

6. Instrument panel according to one of Claims 1 to 5, **characterized in that** the items of equipment comprise a control button (110, 110') distinct from the piloting set point adjustment buttons, for resetting the atmospheric pressure for the purpose of an altitude computation, this button being active for the resetting of pressure only when the equipment is in standby data display mode.

7. Integrated item of standby equipment intended to be mounted on an instrument panel according to one of the preceding claims, **characterized in that** it comprises both the hardware and software capable of displaying on a single display screen either standby data, including a standby horizon, when the equipment is operating in a standby data display mode, or automatic pilot set points when the equipment is operating in a piloting set point display mode, the equipment being provided with piloting set point adjustment buttons.

8. Equipment according to Claim 7, **characterized in that** it comprises an atmospheric pressure reset button (110), active when the equipment is in standby data display mode.

9. Equipment according to Claim 8, **characterized in that** the equipment has a mode switchover button (81), active for inverting the equipment operating mode and capable of sending a mode inversion signal to another identical item of equipment of the same instrument panel.
